# EUROPEAN PATENT APPLICATION

(11) **EP 2 239 305 A1**
(43) Date of publication of application: **13.10.2010**
(21) Application number: 09157603.3
(22) Date of filing: 08.04.2009
(51) Int. Cl.: C09C 1/36, C09C 3/08, C09C 3/12, C08K 3/22, C08K 3/24, H01G 4/00

(54) **Method, filler material, polymer composition and product**

(71) Applicant: Premix Oy, 05200 Rajamäki (FI)
(72) Inventor: Vilkman, Taisto, 04310, Tuusula (FI); Kiikka, Tuomas, 00430, Helsinki (FI)
(74) Representative: Kaukonen, Juha Veikko

(57) **Abstract**

A method for producing a filler material having a high dielectric constant and for dispersing in a polymer matrix, a filler material, a polymer composition, an antenna element, and a buried capacitor are provided. The method comprises: obtaining a basic filler comprising carrier particles selected from BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₂, SrZrO₃ and/or ZnZrO₃, and coating the carrier particles by organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

## Description

The invention relates to a method for producing a filler material having a high dielectric constant and for dispersing in a polymer matrix.

The invention further relates to a filler material having a high dielectric constant, the material comprising basic filler particles and a first coating layer arranged on said basic filler particles.

The invention further relates to a polymer composition comprising a polymer matrix material and a filler material mixed therein.

The invention further relates to an antenna element of a mobile terminal comprising a high dielectric constant polymer composition, the polymer composition comprising a polymer matrix material and a filler material mixed therein.

The invention further relates to a buried capacitor comprising a high dielectric constant polymer composition, the polymer composition comprising a polymer matrix material and a filler material mixed therein.

### BACKGROUND OF THE INVENTION

As to their electrical properties, polymers are usually dielectrics. However, in some applications the dielectric constant of polymers is not high enough. Applications where a high dielectric constant is needed are, for instance, buried capacitors and antennae.

It is known to raise the dielectric constant of polymers by admixing a filler having a high dielectric constant with the polymer acting as a matrix material. Suitable fillers include, for instance, ceramic fillers. For example, European patent application EP0902048 discloses a flexible, high dielectric constant polyimide film where a ferroelectric ceramic filler is admixed with a polymer matrix. Otherwise, polymers or resins are an ideal material group to be used for the manufacture of high-quality products having complicated shapes, low weight and reasonable costs.

However, a need still exists to further raise the dielectric constant of polymer compositions.

### BRIEF DESCRIPTION OF THE INVENTION

An object of the present invention is to provide a method, a filler material, a polymer composition, a product, and a use for eliminating or alleviating the problems described above.

The method of the invention is characterized by producing a filler material having a high dielectric constant and for dispersing in a polymer matrix, the method comprising: obtaining a basic filler comprising carrier particles selected from BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃, and coating the carrier particles by organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

The filler material of the invention is **characterized in that** said basic filler particles comprise BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO, BaSnO, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃, and the first coating layer comprises organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

The polymer composition of the invention is **characterized in that** the filler material comprises BaₓSr₁₋ₓTiO₃, wherein x = 0 to 1, Mg₂TiO₄, Bi₂(TiO₃)₃, PbTiO₃, NiTiO₃, CaTiO₃, ZnTiO, Zn₂TiO₄, BaSnO, Bi₂(SnO₃)₃, CaSnO, PbSnO₃, MgSnO₃, SrSnO₃, ZnSnO₃, BaZrO₃, CaZrO₃, PbZrO₃, MgZrO₃, SrZrO₃ and/or ZnZrO₃ coated by a first coating comprising organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

The antenna element of the mobile terminal of the invention is **characterized in that** the filler material comprises BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ coated by a first coating organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

The buried capacitor of the mobile terminal of the invention is **characterized in that** the filler material comprises BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ coated by a first coating comprising organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

The essential idea of the invention is that the dielectric constant of a polymer is raised by a basic filler comprising carrier particles selected from BaₓSr₁₋ₓTiO₃, wherein x = 0 to 1, such as BaTi03, SrTi03, or Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃, said carrier particles being coated by a first coating comprising organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

An advantage of the invention is that the dielectric constant of the polymer can be raised and, thus, the performance of the applications demanding a high dielectric constant can be improved.

Furthermore, the idea of a preferred embodiment is that the carrier particles coated by organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine, are further coated by electrically conductive molecules, such as polyaniline, polypyrrol, 1,6-diphenyl-1,3,5-hexatriene or perylene. An advantage is that even higher values of a dielectric constant can be reached and, furthermore, lower values of tangent loss at the same level of the dielectric constant can also be reached. Also electrically neutral long-chained aromatic compounds, i.e. molecular wires may be attached to the coating.

### BRIEF DESCRIPTION OF THE FIGURES

The invention will be described in detail in the attached drawings, in which
Figure 1a schematically shows a first particle of the invention,
Figure 1b schematically shows a second particle of the invention,
Figure 2 schematically shows dielectric constants of test specimens made from polymer compositions of the invention and compared with a test specimen made from a prior art polymer composition as a function of volume of particle percentage of the compositions,
Figure 3 schematically shows tangent loss of test specimens made from polymer compositions of the invention and compared with a test specimen made from a prior art polymer composition as a function of volume of particle percentage of the compositions,
Figure 4 schematically shows a buried capacitor as a first example of the products of the invention, and
Figure 5 schematically shows an antenna as a second example of the products of the invention.

### DETAILED DESCRIPTION OF THE INVENTION

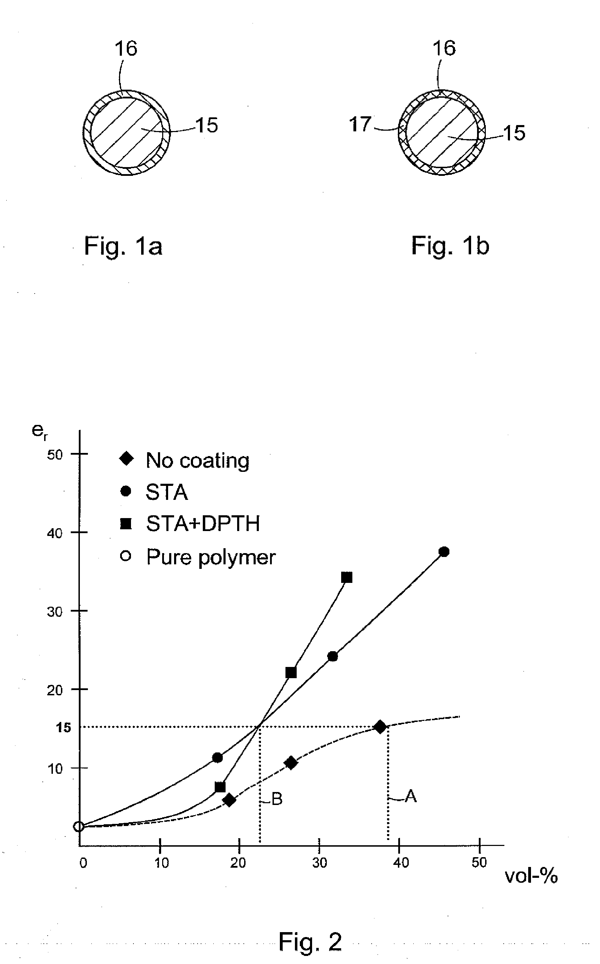

Figures 1a and 1b schematically show particles of the invention. The particles comprise a carrier particle 15 that is a particle of BaₓSr₁₋ₓTiO₃, wherein x = 0 - 1, such as BaTiO₃ or SrTiO₃. On top of the carrier particle 15, a suitably thick first coating layer 16 is coated. Instead of the above-mentioned BaₓSr₁₋ₓTiO₃ BaSrTi particle, the coated particle may be selected from Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and ZnZrO₃.

The first coating layer 16 may be of organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine, etc.

The first coating layer is a self-assembled monomolecular layer.The coating process may take place as described later in this description.

The particle shown in Figure 1b further comprises a second coating layer 17. This is also a self-assembled monomolecular layer the molecules of which are arranged to overlap the first coating layer 16. The second coating layer 17 may comprise, for instance, polyaniline, polypyrrol, 1,6-diphenyl-1,3,5-hexatriene or perylene.

Also electrically neutral molecular wires may be included in the first or second coating.

It is to be noted that the coating layers 16 and 17 may encase fully or only partially the surface of the particle 15. In addition, the coating layers 16 and 17 may also be made of material compositions comprising not only the above-mentioned molecules but also further molecules or substances.

The carrier particles 15 shown in Figures 1a and 1b are spherical ones. However, let it be pointed out that the shape of the carrier particle 1 may be other than spherical, such as a cube, flake, rod or the like.

The invention will be described in detail in the following examples, where the materials and reagents used and their abbreviations are:
BST = Barium Strontium Titanate, supplied e.g. by Ferro Corporation or by MRA, the particle size distribution being D10 0.42 µm, D50 1.1 µm, D95 2.99 µm,
STA = stearine acid (Alfa Aesar CAS 57-11-4),
DPHT = 1,6-diphenyl-1,3,5-hexatriene (Fluka 43050), perylene (Fluka)
ODM = octadecylmercaptan (Aldrich O-185-8, 98%).

### Example 1

### Coating carrier particles

3 g of STA was diluted in 500 ml of toluene. 250 g BST by Ferro was added to the mixture of toluene and STA. The slurry obtained was mixed for 3 hours at room temperature, and the slurry was then filtered and BST particles were rinsed with toluene. The purpose of the rinsing was to wash out any excess of stearine acid so that only stearine acid molecules which have bonded to the BST particles remain in the slurry. The rinsing may be repeated several times.

It is to be noted here that instead of toluene also another solvent may be used in the dilution of STA. Some examples of suitable solvents are alcohols like ethanol, acetone, and chloroform.

Some STA coated BST particles were coated with DPHT as follows. 0.2 g of DPHT were diluted in 500 ml of toluene. STA coated BST particles were added to the mixture of toluene and DPHT. Prior to the addition, the particles may be dried in an incubator at a temperature of, for instance, 60°C. The slurry consisting of STA coated BST particles, DPHT and toluene was mixed for 2.5 hours.

The slurry was then filtered, the coated BST particles were rinsed with toluene in order to wash out DPTH molecules not bonded to the BST particles, and dried in an incubator at a temperature of 60°C. The mass of the BST particles coated with STA and DPHT was about 140 g.

The success of the coating processes disclosed above was checked by pouring a small amount of BST particles in to water. Uncoated BST particles sank in the water, whereas both STA coated BST particles and STA-DPHT coated BST particles floated in the water.

### Preparation of the polymer composition

The particles were mixed with a polymer (ER 182P) which is polypropylene-graft-poly(styrene-stat-divinylbentzene) supplied by NOF Corporation. The polymer matrix of a composition was made as follows:
If not already dried, the particles were dried in an incubator at a temperature of 60°C. The dried particles were mixed with the polymer by using a Haake Minilab mixing extruder at a temperature of 220°C. The mixing stage lasted about 20 min.

The polymer matrix may comprise, for instance, one or more thermoplastic or thermoset materials listed here:

PBT (polybutylene terephthalate), PA (polyamide), such as PA6 or PA66, PMMA (polymethyl-methacrylate), PC (polycarbonate), SAN (styrene/acrylonitrile copolymer), POM (polyoxymethylene), PET (polyethylene terephthalate), PS (polystyrene), polyolefins, such as PE, PP (polypropylene), COC (cyclic polyolefin copolymer), PMP (polymethyl pentene), ABS (acrylonitrile/butadiene/styrene copolymer), LCP (liquid crystalline polymer), EP (epoxy), PUR (polyurethane), UP (unsaturated polyester), CA (cellulose acetate), CAB (cellulose acetate butyrate), CAP (cellulose acetate propionate), CF (cresol formaldehyde), CMC (carboxy-methyl cellulose), CN (cellulose nitrate), CP (cellulose propionate), CS (casein), CTA (cellulose tri-acetate), EC (ethyl cellulose), FF (furane-formaldehyde), MC (methyl cellulose), MF (melamine-formaldehyde), PAI (polyamideimide), PAN (polyacrylonitrile), PAS (polyaryl sulphone), PAUR (polyester urethane), PB (polybutylene), PBA (polybutyl acrylate), PBT (polybutylene terephthalate), PCTFE (polychlorotrifluoroethylene), PDAP (polydiallyl phthalate), PEEK (polyetheretherketone), PEK (polyetherketone), PEI (polyether imide), PEN (polyethylene naphthalate), PEOX (polyethylene oxide), PES (polyether sulfone), PEUR (polyether urethane), PF (phenol-formaldehyde), PFA (perfluoro alkoxyl alkane), PI (polyimide), PIB (polyisobutylene), PIR (polyisocyanurate), PMI (polymethacrylimide), PMS (poly-α-methylstyrene), PPA (polyphthalamide), PPE (polyphenylene ether), PPOX (polypropylene oxide), PPS (polyphenylene sulphide), PPSU (polyphenylene sulfone), PSU (polysulfone), PTFE (polytetrafluoroethylene), VAC (polyvinyl acetate), PVAL (polyvinyl alcohol), PVB (polyvinyl butyral), PVC (polyvinylchloride), PVDC (polyvinyliden chloride), PVDF (polyvinyliden fluoride), PVF (polyvinylfluoride), PVFM (polyvinyl formal), PVK (polyvinyl carbazole), PVP (polyvinylpyrrolidone), SI (silicone), SP (saturated polyester), UF (urea-formaldehyde), A/B/A (acrylonitrile/butadiene/acrylate), A/CPE/S (acrylonitrile/chloropolyethylene/styrene), A/EPDM/S (acrylonitrile/ethylene-propylene-diene/styrene), A/MMA(acrylonitrile/methyl methacrylate), ASA (acrylonitrile/styrene/acrylate), E/EA (ethylene/ethylacrylate), E/MA (ethylene/methacrylic acid), E/P (ethylene/propylene), EPDM (ethylene/propylene/ diene), E/TFE (ethylene/etrafluoroethylene), E/VAC (ethylene/ vinyl acetate), E/VAL (ethylene/vinyl alcohol), FEP (perfluoro ethylene/propylene), MBS (metacrylate/butadiene/styrene), MPF (melamine/phenol-formaldehyde), PEBA (polyether amide), S/B (styrene/butadiene), SMA (styrene/maleic anhydride), S/MS (styrene/methylenestyrene), VC/E (vinylchloride/ethylene), VC/E/MA (vinyl chloride/ ethylene/methyl acrylate), VC/E/VAC (vinylchloride/ethylene/vinyl acetate), VC/MA (vinyl chloride /methyl acrylate), VC/MMA (vinyl chloride /methyl metacrylate), VC/OA (vinyl chloride /octyl acrylate), VC/VAC (vinyl chloride /vinyl acetate), VC/VDC(vinyl chloride /vinyldene chloride), ABR (acrylatebutadiene rubber), ACM (acryl rubber), ANM (acrylateacrylonitrile rubber), AU (urethane rubber), BIIR (brominebutylene rubber), BR (butadiene rubber), CIIR(chloro-butyl rubber), CM (chloro-ethylene rubber), CO (epichlorohydrin rubber), CR (chloroprene rubber), CSM (chlorosulphonic-ethylene rubber), EACM (ethylene-acrylate rubber), EAM (ethylene-vinyl acetate), ECO (epichlorohydrin rubber), EPDM (ethylene-propylene-diene rubber), EPM (ethylene-propylene rubber), EVAM (ethylene-vinyl acetate rubber), FMQ (silicone rubber), FPM (fluoro rubber), GPO (propylene oxide rubber), IIR (isobutylene-isoprene rubber), IM (polyisobutylene), IR (isoprene rubber), LSR (liquid silicone rubber), NBR (acrylonitrile rubber), NIR (acrylonitrile-isoprene rubber), NR (natural rubber), PBR (vinylpyridine-butadiene rubber), PSBR (vinylpyridine-styrene-butadiene rubber), SBR (styrene-butadiene rubber), SBS (styrene-butadiene thermoplastic elastomer), SCR (styrene-chloroprene rubber), SIR (styrene-isoprene rubber), SIS (styrene-isopropene thermoplastic elastomer), SOS (styrene-olefin thermoplastic elastomer), T (polysulfide rubber), TOE (olefin thermoplastic elastomer), TPAE (thermo-plastic esterether elastomer), TPE (thermo-plastic elastomer), TPU (thermo-plastic urethane elastomer), XBR (carboxyl-butadiene rubber), XCR(carboxyl-cloroprene rubber), XNBR (carboxyl-acrylonitrile-butadiene rubber), XSBR (carboxyl-styrene-butadiene rubber), or combinations or grafted products thereof.

The polymer matrix may be rigid, i.e. substantially non-elastic, or elastic, i.e. rubber-like, or a combination thereof. The polymer composition of the invention can be worked and processed into finished products in various ways with machining tools and methods generally in use in the plastics industry. The selection of tools and methods depends mainly on the nature and properties of the matrix material. Some examples of the methods are injection moulding, extrusion, and thermoforming.

### Measurement of dielectric constant εᵣ and loss tangent tan δ of the poly mer composition

Test specimens were made from the polymer compositions prepared in the above-described manner by an injection moulding method. The composition was fed in to a Haake Minijet injection unit, the cylinder temperature of which was 220°C. The injection pressure was 400 bar, the mould temperature was 100°C and the post-pressure in the mould was 500 bar. The shape of the test specimens was a rectangular plate having dimensions 26mm x 26mm x 0.5 mm.

The dielectric constants εᵣ and loss tangents tan δ were measured by using an Agilent E4991A RF Impedance/Material Analyser measuring device. The measuring frequency was in the range of 1MHz to 1GHz.

**Table I**

| **Specimen No.** | **filler [vol.-%]** | ε**ᵣ** | **tan δ** |
|---|---|---|---|
| No coating 1 (prior art) | 18.80 | 5.89 | 0.003 |
| No coating 2 (prior art) | 26.70 | 10.56 | 0.004 |
| No coating 3 (prior art) | 37.70 | 15.29 | 0.007 |
| STA coating 1 | 17.30 | 11.10 | 0.004 |
| STA coating 2 | 31.70 | 24.11 | 0.010 |
| STA coating 3 | 45.60 | 37.39 | 0.013 |
| STA+DPHT coating 1 | 17.50 | 7.54 | 0.003 |
| STA+DPHT coating 2 | 26.70 | 22.05 | 0.007 |
| STA+DPHT coating 3 | 34.60 | 35.06 | 0.014 |
| Pure polymer | 0 | 2.20 | 0.0005 |

### Results

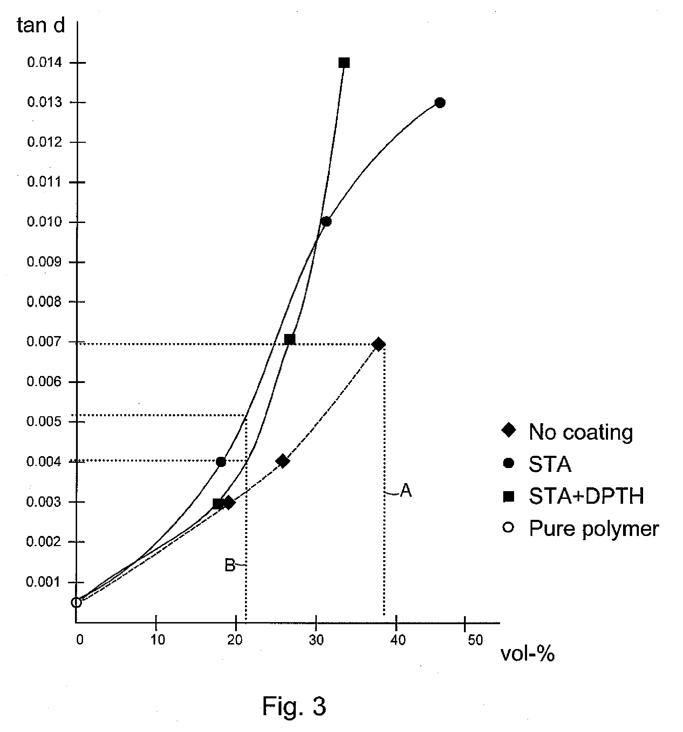

Figure 2 schematically shows the dielectric constant (εᵣ) and Figure 3 the tangent loss (tan δ) of test specimens made from polymer compositions of the invention and compared with a test specimen made from a prior art polymer composition as well as a pure polymer as a function of the volume of the particle percentage of the compositions.

As Figure 2 shows, as the proportion of the particles increases, the dielectric constant of the material filled with not coated particles does not reach high values but the curve of the dielectric constant levels rapidly and reaches almost a horizontal course when the filling rate of the material approaches about 50 volume-%. One can estimate that the value of dielectric constant would stay below a value of about 20 even if the filling rate is raised over 50 volume-%.

Instead, the curves of the dielectric constant of the polymer compositions according to the invention, i.e. filled with STA or STA+DPHT coated particles, raise constantly and follow almost a linear way through the entire measured filling range. Furthermore, it is clear that the polymer compositions according to the invention give a much higher value of dielectric constant compared to the value reached by the composition filled with not coated particles and having an equal filling rate.

When comparing the compositions according to the invention one can notice that STA gives a higher dielectric constant in lower filling rates, that is about 22 volume-% at the maximum, whereas the dielectric constant of a composition filled with STA+DPHT has a more rapidly ascending curve reaching a higher dielectric constant when the filling rate is about 22 volume-% or higher.

Figure 3 schematically shows tangent loss of test specimens made from polymer compositions of the invention and compared with a test specimen made from a prior art polymer composition as a function of the volume of the particle percentage of the compositions.

It can be seen that the tangent loss of the specimens made of compositions of the invention is higher than that of the prior art composition having the same filling rate. The situation is completely different when comparing compositions that have equal dielectric constants. For example, if one is aspiring after a material having a dielectric constant of about 15, see Figure 2, the filling rate of the prior art composition should be about 38 volume-% (line A), whereas the filling rates of the compositions of the invention are about 22 volume-% (line B). As can be seen in Figure 3, the tangent loss of the prior art composition having a dielectric constant of about 15 is about 0.007, which is essentially higher than that of the compositions of the invention; STA coated particles give a tangent loss that is about 0.0052, and STA+DPHT coated particles give a tangent loss that is about 0.004.

The lower the tangent loss, the lower the loss of electromagnetic energy fed in the composition. Low losses, i.e. high recovery of energy, is an eligible feature of dielectric materials of capacitors and antennae.

### Example 2

The polymer was ABS/PC Cycoloy C1200HF by General Electric Plastics and BST particle made by MRA Laboratories, MA, USA.

### Coating carrier particles

3 g of STA were diluted in 500 ml of toluene. 200 g BST by MRA was added to the mixture of toluene and STA. The slurry obtained was mixed for 3 hours at room temperature, and the slurry was then filtered and BST particles were rinsed with toluene.

Some STA coated BST particles were coated with DPHT as follows. 0.06 g of DPHT was diluted in 200 ml of toluene. STA coated BST particles were added to the mixture of toluene and DPHT. Prior to the addition, the particles may be dried in an incubator at a temperature of, for instance, 60°C. The slurry consisting of STA coated BST particles, DPHT and toluene was mixed for 2.5 hours.

The slurry was then filtered, coated BST particles were rinsed with toluene in order to wash out DPTH molecules not bonded to the BST particles, and dried in an incubator at a temperature of 60°C. The mass of the BST particles coated with STA and DPHT was about 65 g.

Other STA coated BST particles were coated with perylene as follows. 0.068 g of perylene was diluted in 200 ml of toluene. STA coated BST particles were added to the mixture of toluene and perylene.

The slurry consisting of STA coated BST particles, perylene and toluene was mixed for 2.5 hours. The slurry was then filtered, coated BST particles were rinsed with toluene and dried in an incubator at a temperature of 60°C. The mass of the BST particles coated with STA and perylene was about 65 g.

Some BST particles were coated with ODM as follows. 1.1 g of ODM was diluted in 500 ml of toluene. BST particles (163 g) were added to the mixture of toluene and ODM and the slurry consisting of BST particles, ODM and toluene was mixed for 3 hours. The slurry was then filtered, coated BST particles were rinsed with toluene and dried in an incubator at a temperature of 60°C.

The ODM coated BST particles were coated with perylene in a manner similar to that used in connection with STA-coated BST particles above.

### Preparation of the polymer composition

The preparation of the polymer compositions shown in Table II took place as mentioned in Example 1.

**Table II**

| **Specimen No.** | **filler [vol.-%]** | **εᵣ** | **tan δ** |
|---|---|---|---|
| No coating (prior art) | 24.40 | 7.80 | 0.0076 |
| STA+DPHT coating | 11.70 | 6.65 | 0.0078 |
| STA+perylene coating | 12.20 | 6.52 | 0.0078 |
| ODM+perylene coating | 11.50 | 6.83 | 0.0081 |
| **STA** | **12.70** | **6.48** | **0.0076** |
| **ODM** | **13.90** | **7.06** | **0.0083** |
| Pure polymer | 0 | 2.70 | 0.0070 |

As can be seen, about the same level of dielectric constant εᵣ has been reached in the compositions according to the invention although their filling rates are about half the rate of the prior art composition.

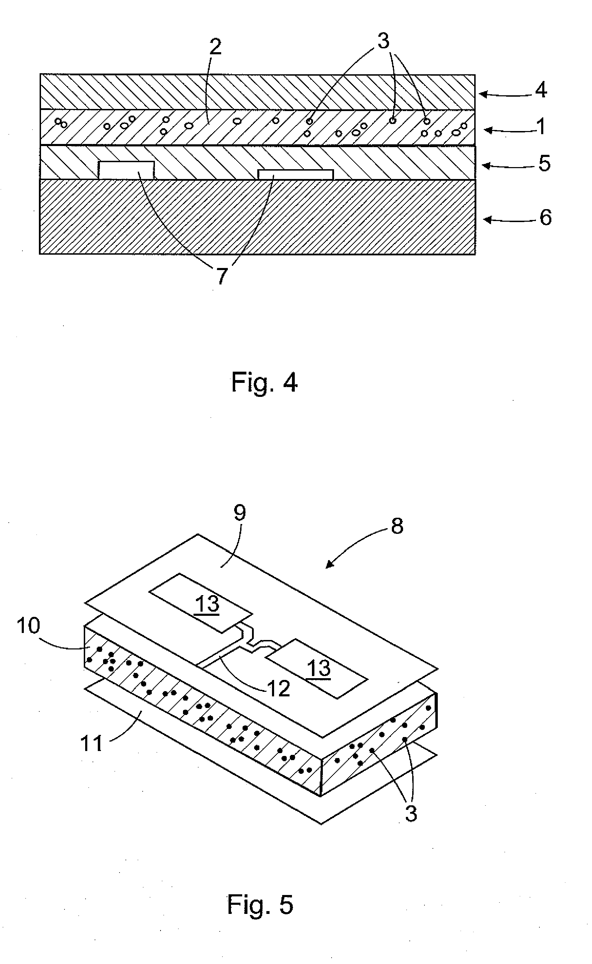

Figure 4 schematically shows the structure of a buried capacitor as a first example of the products of the invention.

The structure comprises a dielectric layer 1 of a matrix polymer 2 filled with a filler material comprising carrier particles 3 comprising BaₓSr₁₋ₓTiO₃, wherein x = 0 - 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ coated by a first coating comprising organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

On a first side of said dielectric layer 1 is arranged a conductive layer 4 made, for instance, of a copper foil. On a second side of the dielectric layer 1 there is arranged a bonding layer 5. The bonding layer 5 may be, for instance, a layer of unfilled or filled uncured resin.

The bonding layer 5 is arranged to bond the dielectric layer 1 to a laminate 6 upon which patterns 7 of a conductive material are arranged. It is to be noted, however, that the bonding layer 5 is not an essential layer but the patterns 7 may be arranged directly to the dielectric layer 1.

The patterns 7 of the conductive material establish one or more capacitors with the dielectric layer 1 and the conductive layer 4 above it. Due to the high dielectric constant of the dielectric layer 1, the capacitor comprising a composition of the invention may occupy a smaller areal size than known buried capacitors.

Let it be pointed out that the dielectric layer 1 may include, besides the above-mentioned coated particles, also further particles and fillers, such as commonly known fillers used for lowering material costs of polymer products and/or fillers having low permittivity.

The polymer matrix may comprise one, two or more polymer phases.

Figure 5 schematically shows an antenna element as a second example of the products of the invention. The antenna element 8 is based on the principle of a patch antenna. The antenna element 8 may be used in mobile terminals, e.g. mobile phones, or in any other means where an antenna is needed for sending and/or receiving signals.

The antenna element 8 comprises a dielectric film 9, a dielectric spacer layer 10, and a ground plane 11. On the dielectric film 9 there is arranged a feed circuit 12 which leads to one or more patch radiating elements 13. The dielectric spacer layer 10 arranged between the patch radiating elements 13 and the ground plane 11 is made of a matrix polymer 2 filled with a filler material comprising coated carrier particles 3 as described above. Furthermore, the dielectric film 9 may also be manufactured from a plastic film of a matrix material and coated carrier particles. It is to be noted, however, that the dielectric film 9 is not an essential feature but the feed circuit 12 and the radiating elements 13 may be arranged directly in the dielectric spacer layer 10.

The examples and the related specification are only intended to illustrate the inventive idea. The details of the invention may vary within the scope of the claims.

Accordingly, the invention is naturally not restricted to the composites described in the attached examples.

The basic form of a particle in the conductive filler may be for instance a sphere, a square, a flake, a fibre or any other particle form known per se. The filler may also comprise two or more different particle forms.

## Claims

1. A method for producing a filler material having a high dielectric constant and for dispersing in a polymer matrix, the method comprising:
obtaining a basic filler comprising carrier particles selected from BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO, and
coating the carrier particles by organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

2. A method as claimed in claim 1, **characterized by** coating the basic filler particles by mixing them with a solvent comprising diluted stearine acid, and drying the coated basic filler particles.

3. A method as claimed in claim 2, **characterized in that** said solvent is toluene, ethanol, acetone, or chloroform.

4. A method as claimed in any one of the preceding claims, **characterized by** coating a second coating layer on to said coated basic filler particles, the second coating layer comprising 1,6-diphenyl-1,3,5-hexatriene.

5. A method as claimed in any one of claims 1 to 3, **characterized by** coating a second coating layer on to said coated basic filler particles, the second coating layer comprising perylene.

6. A filler material having a high dielectric constant, the material comprising basic filler particles and a first coating layer arranged on said basic filler particles, **characterized in that** said basic filler particles comprise BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃, and the first coating layer comprises organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

7. A filler material as claimed in claim 6, **characterized in that** a second coating layer is arranged on the first coating layer, the second coating layer comprising 1,6-diphenyl-1,3,5-hexatriene.

8. A filler material as claimed in claim 6, **characterized in that** a second coating layer is arranged on the first coating layer, the second coating layer comprising perylene.

9. A high dielectric constant polymer composition, comprising a polymer matrix material and a filler material mixed therein, **characterized in that** the filler material comprises BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ coated by a first coating comprising organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

10. A composition as claimed in claim 9, **characterized in that** the polymer matrix material is thermoplastic.

11. A composition as claimed in claim 9, **characterized in that** the polymer matrix material is thermoset.

12. A composition as claimed in any one of claims 9 to 11, **characterized in that** a second coating layer is arranged on the first coating layer, the second coating layer comprising 1,6-diphenyl-1,3,5-hexatriene.

13. A composition as claimed in any one of claims 9 to 11, **characterized in that** a second coating layer is arranged on the first coating layer, the second coating layer comprising perylene.

14. An antenna element of a mobile terminal, comprising a high dielectric constant polymer composition, the polymer composition comprising a polymer matrix material and a filler material mixed therein, **characterized in that** the filler material comprises BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ coated by a first coating comprising organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.

15. A buried capacitor comprising a high dielectric constant polymer composition, the polymer composition comprising a polymer matrix material and a filler material mixed therein, **characterized in that** the filler material comprises BaₓSr₁₋ₓTiO₃, wherein x = 0 to 1, Mg₂TiO₄, Bi₂(TiO₃)₃, PbTiO₃, NiTiO₃, CaTiO₃, ZnTiO₃, Zn₂TiO₄, BaSnO₃, Bi₂(SnO₃)₃, CaSnO₃, PbSnO₃, MgSnO₃, SrSnO₃, ZnSnO₃, BaZrO₃, CaZrO₃, PbZrO₃, MgZrO₃, SrZrO₃ and/or ZnZrO₃ coated by a first coating comprising organic acid, alcohol, tiol or silane, such as stearine acid, stearyl alcohol, pentaerytritol, trimethylolethane, trimethylolpropane, alkylmercaptans, such as octadecylmercaptan or dodecylmercaptan, dialkyldisulphide (-S-S-) 4-pyridine or phosphine.
